# FASCICULE DE BREVET EUROPEEN

(11) **EP 1 691 203 B1**
(45) Date de publication et mention de la délivrance du brevet: **25.07.2012**
(21) Numéro de dépôt: 05003183.0
(22) Date de dépôt: 15.02.2005
(51) Int. Cl.: G01P 15/125, G01P 15/18

(54) **Circuit électronique comportant un capteur capacitif à faible niveau de bruit et accéléromètre équipé de ce circuit**
Elektronische Schaltung mit rauscharmem Messkondensator sowie mit einer solchen Schaltung ausgerüsteter Beschleunigungsaufnehmer
Electronic circuit comprising a low noise capacitive sensor and accelerometer being equiped with such a circuit

(43) Date de publication de la demande: 16.08.2006
(73) Titulaire: EM Microelectronic-Marin SA, 2074 Marin (CH)
(72) Inventeur: Willemin, Michel, 2515 Prêles (CH); Pfefferli, Beat, 2075 Thielle-Wavre (CH)
(74) Mandataire: Ravenel, Thierry Gérard Louis

(56) Documents cités:
- FR-A- 2 720 510
- US-A- 5 351 519
- GOLA A ET AL: "INTERFACE FOR MEMS-BASED ROTATIONAL ACCELEROMETER FOR HDD APPLICATIONS WITH 2.5 RAD/S2 RESOLUTION AND DIGITAL OUTPUT" IEEE SENSORS JOURNAL, IEEE SERVICE CENTER, PISCATAWAY, NJ, US, vol. 3, no. 4, août 2003 (2003-08), pages 383-392, XP001175950 ISSN: 1530-437X
- LEUTHOLD H ET AL: "AN ASIC FOR HIGH-RESOLUTION CAPACITIVE MICROACCELEROMETERS" SENSORS AND ACTUATORS, ELSEVIER SEQUOIA S.A. LAUSANNE, CH, vol. A21/A23, janvier 1990 (1990-01), pages 278-281, XP002013866

## Description

L'invention concerne un circuit électronique de mesure d'une force, en particulier un circuit comportant un capteur capacitif relié électriquement à un pont capacitif et prévu pour être agencé dans un accéléromètre de manière à mesurer une force d'inertie correspondant à une accélération.

Dans ce type de circuit électronique le capteur capacitif comporte une électrode mobile suspendue élastiquement entre une première et une seconde électrodes fixes de manière à former respectivement un premier et un second condensateurs à capacité variable. Le pont capacitif produit un signal électrique de sortie qui est fonction des variations de capacité des condensateurs et qui est représentatif d'une force appliquée sur le capteur capacitif, ou d'une force d'inertie subie par le capteur capacitif, par exemple une mesure d'accélération. La valeur de la capacité de chaque condensateur est sensiblement inférieure à un picofarad, lorsque l'électrode mobile occupe une position de repos, à égale distance de chaque électrode fixe, et la fréquence d'excitation du circuit est comprise globalement dans le domaine des basses fréquences.

Un circuit électronique de ce type est décrit notamment dans un article de H. Leuthold et F. Rudolf paru dans la revue « Sensors and Actuators » A21-A23 (1990), pages 278 à 281.

Avec ce type de circuit électronique, des problèmes de bruit peuvent apparaître dans les mesures d'accélération. Ces problèmes apparaissent notamment lors de variations importantes de l'intensité du courant et/ou lors de pics de courant causés par des commutations de tension dans le pont capacitif et/ou lors de pics de forces électrostatique induites.

De plus, lorsque ce type de circuit électronique est agencé dans un accéléromètre équipé de plusieurs capteurs capacitifs, des phénomènes de couplage apparaissent entre les capteurs capacitifs, ce qui provoque des perturbations dans les mesures d'accélération. Ce couplage peut s'effectuer via les signaux communs aux capteurs capacitifs, par exemple à travers l'alimentation en courant.

L'invention vise à remédier à ces inconvénients.

Dans ce but, l'invention propose un circuit électronique du type décrit précédemment, caractérisé en ce qu'une résistance série est interposée entre chacune des trois électrodes et le pont capacitif de manière à former un filtre passe-bas.

Grâce à l'agencement selon l'invention, les effets négatifs des pics de courant sont limités.

L'invention est particulièrement adaptée pour améliorer le fonctionnement d'un pont capacitif à compensation de charges.

L'invention propose aussi un accéléromètre, qui comprend les caractéristiques définies dans la revendication 5.

D'autres caractéristiques et avantages de la présente invention apparaîtront plus clairement à la lecture de la description détaillée qui suit, faite en référence aux dessins annexés donnés à titre d'exemple non limitatifs et dans lesquels :
- la figure 1 est un schéma qui représente un circuit électronique conforme aux enseignements de l'invention pour la mesure d'une force d'inertie correspondant à une accélération ;
- la figure 2 est un schéma de principe qui représente le capteur capacitif équipant le circuit électronique de la figure 1 ;
- la figure 3 est un schéma qui représente un accéléromètre conforme aux enseignements de l'invention équipé d'un circuit électronique comportant trois capteurs capacitifs.

Dans la suite de la description, des éléments similaires ou identiques seront désignés par les mêmes références.

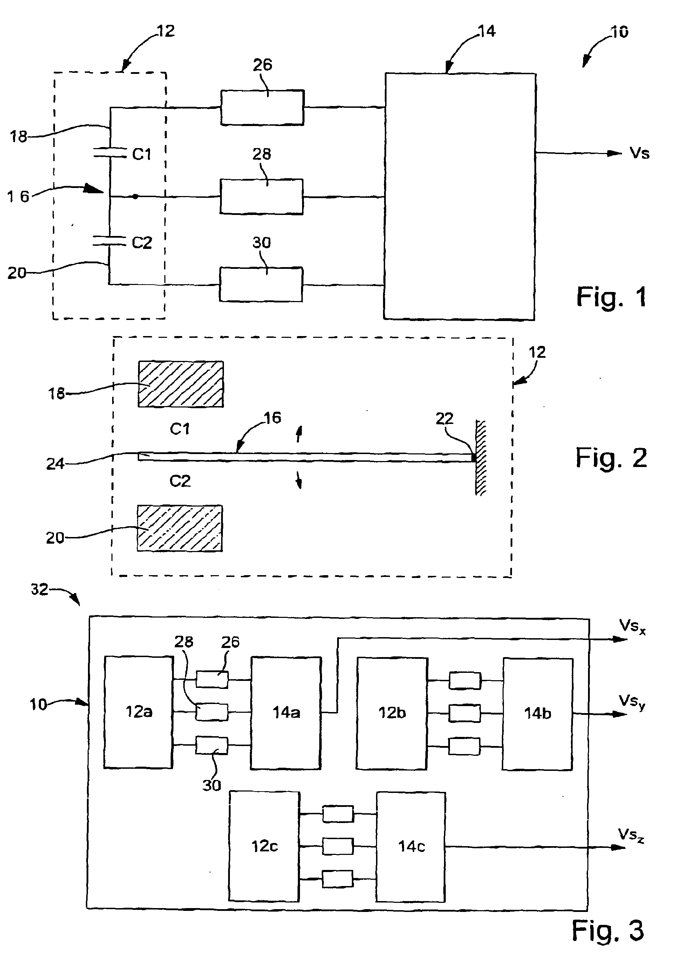

Sur la figure 1, on a représenté schématiquement un circuit électronique 10 conforme aux enseignements de l'invention pour la mesure d'une force d'inertie correspondant à une accélération.

Le circuit électronique 10 comporte un capteur capacitif 12 qui est branché sur un pont capacitif 14.

Comme on peut le voir plus en détail sur la figure 2, le capteur capacitif 12 comporte une électrode mobile 16 suspendue élastiquement entre une première 18 et une seconde 20 électrodes fixes. La première électrode fixe 18 et l'électrode mobile 16 forment un premier condensateur C1 à capacité variable, et la seconde électrode fixe 20 forme, avec l'électrode mobile 16, un second condensateur C2 à capacité variable.

Selon le mode de réalisation simplifié qui est représenté schématiquement sur la figure 2, l'électrode mobile 16 a la forme d'une lame conductrice qui est fixée à l'une de ses extrémités 22 de sorte que son extrémité opposée 24 puisse se déplacer vers l'une ou l'autre des électrodes fixes 18, 20 lorsque le capteur capacitif 12 est soumis à une composante d'accélération orthogonale à la lame conductrice.

On note que, selon un mode de réalisation plus perfectionné, l'électrode mobile 16 a la forme d'un peigne dont les dents sont reçues dans des encoches fixes complémentaires délimitées par les électrodes fixes 18, 20.

Lorsque l'électrode mobile 16 occupe une position de repos, c'est-à-dire en l'absence d'accélération, elle se situe approximativement à égale distance de chaque électrode fixe 18, 20, de sorte que les capacités des deux condensateurs C1, C2 sont approximativement égales.

Le fonctionnement d'un tel capteur capacitif 12 est décrit notamment dans le préambule du document FR-A-2.720.510.

Le pont capacitif 14 est prévu pour produire un signal électrique de sortie Vs qui est fonction des variations de capacité des condensateurs C1, C2 et qui est représentatif d'une mesure d'accélération. A cet effet, le pont capacitif 14 comporte des moyens (non représentés) pour mesurer les variations de capacité et pour comparer les variations mesurées sur le premier et sur le second condensateurs C1, C2, de manière à en déduire un signal électrique de sortie Vs approprié.

Le pont capacitif 14 est du type à compensation de charges.

On pourra se reporter à l'article de H. Leuthold et F. Rudolf, ainsi qu'au préambule du document FR-A-2.720.510 qui décrivent et représentent un pont capacitif à compensation de charges.

Toutefois, l'invention s'applique également à des circuits comportant des ponts capacitifs à compensation de force.

L'invention concerne particulièrement un circuit électronique 10 comportant un capteur capacitif 12 dans lequel la valeur des capacités des deux condensateurs C1, C2 est très faible, c'est-à-dire sensiblement inférieure à un picofarad. Par exemple, la capacité des condensateurs G1, C2 peut être égale à 600 femtofarads, voire encore inférieure. Dans ce type de circuit électronique 10, les variations de capacité des condensateurs C1, C2 liées à une variation de la force d'inertie sont extrêmement faibles, de l'ordre de quelques dizaines d'attofarad.

Ce type de circuit électronique 10 est prévu pour fonctionner avec une fréquence d'excitation comprise globalement dans le domaine des basses fréquences, de manière à réaliser le circuit électronique 10 sous la forme d'un circuit intégré à très basse consommation de courant.

Conformément aux enseignements de l'invention, un élément de résistance série 26, 28, 30 est interposé directement entre chacune des trois électrodes 16, 18, 20 et le pont capacitif 14 de manière à former un filtre passe-bas.

Grâce à la présence de ces éléments de résistance série 26, 28, 30, on constate une diminution du niveau de bruit lors des mesures d'accélération.

Avantageusement, les éléments de résistance série 26, 28, 30 sont des résistances de valeurs égales. Chaque résistance est, par exemple, sensiblement inférieure à quelques centaines de kilo ohms.

Ainsi, on a constaté que, pour des condensateurs C1, C2 de six cent femtofarads, avec une fréquence d'excitation égale à trente-deux kilohertz, l'utilisation de résistances 26, 28, 30 de deux cent soixante-dix kilo-omhs permet d'obtenir de bons résultats dans la diminution du bruit.

Toutefois, la valeur des résistances 26, 28, 30 pourra être choisie dans une large plage en fonction de la fréquence d'excitation du circuit.

On note que, contrairement à ce qu'on aurait pu craindre, les résistances 26, 28, 30 n'ont pas d'effet négatif sur la précision des mesures d'accélération, ni sur la sensibilité de ces mesures.

Sur la figure 3, on a représenté un accéléromètre 32 qui est réalisé conformément aux enseignements de l'invention et qui comporte un circuit électronique 10 tel que celui qui vient d'être décrit.

L'accéléromètre 32 est ici du type à trois axes, c'est-à-dire qu'il permet de mesurer la valeur des trois composantes d'une d'accélération selon trois axes orthogonaux X, Y, Z. A cet effet, l'accéléramètre 32 comporte trois capteurs capacitifs 12a, 12b, 12c qui sont prévus pour mesurer respectivement la valeur des trois composantes.

Chaque capteur capacitif 12a, 12b, 12c est branché sur un pont capacitif 14a, 14b, 14c associé avec interposition d'une résistance 26, 28, 30 entre chaque électrode 16, 18, 20 et le pont capacitif 14a, 14b, 14c. Chaque pont capacitif 14a, 14b, 14c produit un signal électrique de sortie Vsₓ, Vs_{y}, Vs_{z} représentatif d'une accélération selon l'axe X, Y, Z associé.

Grâce au circuit électronique 10 selon l'invention, l'accéléromètre 32 présente une fiabilité de mesure améliorée. En effet, la présence des résistances 26, 28, 30 améliore les propriétés de découplage entre les capteurs capacitifs 12a, 12b, 12c de sorte qu'ils ne se perturbent plus entre eux.

On note que l'invention s'applique aussi à un circuit comportant un capteur capacitif utilisé pour la mesure d'une force correspondant à une pression appliquée sur le capteur.

## Revendications

1. Circuit électronique (10) de mesure d'une force, comportant un capteur capacitif (12) raccordé à un pont capacitif (14) du type à compensation de charges, pour lequel le capteur capacitif (12) comporte une électrode mobile (16) suspendue élastiquement entre une première (18) et une seconde (20) électrodes fixes de manière à former respectivement un premier (C1) et un second (C2) condensateurs à capacité variable, du type dans lequel le pont capacitif (14) produit un signal électrique de sortie (Vs) qui est fonction des variations de capacité des condensateurs (C1, C2), du type dans lequel la valeur de la capacité de chaque condensateur (C1, C2) est sensiblement inférieure à un picofarad, lorsque l'électrode mobile (16) occupe une position de repos, et du type dans lequel la fréquence d'excitation du circuit (10) est comprise globalement dans le domaine des basses fréquences,
**caractérisé en ce qu'**une résistance série (26, 28, 30) est interposée entre chacune des trois électrodes (16, 18, 20) et le pont capacitif (14) de manière à former un filtre passe-bas.

2. Circuit électronique (10) selon la revendication précédente, **caractérisé en ce que** les résistances série (26, 28, 30) sont identiques.

3. Circuit électronique (10) selon la revendication 1, **caractérisé en ce que** la valeur de chaque résistance (26, 28, 30) est inférieure à quatre cent kilo-ohms.

4. Circuit électronique (10) selon l'une quelconque des revendications précédentes, **caractérisé en ce que** la capacité de chaque condensateur (C1, C2) est inférieure ou égale à six cent femtofarad.

5. Accéléromètre (32) **caractérisé en ce qu'**il comporte un circuit électronique (10) selon l'une quelconque des revendications précédentes, et **en ce qu'**il comporte au moins deux capteurs capacitifs (12a, 12b, 12c) qui mesurent des valeurs d'accélération respectivement dans au moins deux directions, chaque capteur capacitif (12a, 12b, 12c) étant raccordé à un pont capacitif (14a, 14b, 14c) du type à compensation de charges, associé avec interposition de résistances série (26, 28, 30).

6. Accéléromètre (32) selon la revendication précédente, **caractérisé en ce qu'**il comporte trois capteurs capacitifs (12a, 12b, 12c) qui mesurent des valeurs d'accélération respectivement dans trois directions orthogonales entre elles.

## Claims

1. Electronic circuit (10) for measuring a force, including a capacitive sensor (12) connected to a capacitive bridge (14), of the charge compensation type, of the type wherein the capacitive sensor (12) includes a moving electrode (16) suspended elastically between a first (18) and a second (20) fixed electrodes so as to form respectively a first (C1) and a second (C2) capacitors whose capacitance is variable, of the type wherein the capacitive bridge (14) generates an electric output signal (Vs), which is a function of the capacitance variations of the capacitors (C1, C2), of the type wherein the capacitance value of each capacitor (C1, C2) is substantially lower than one picofarad, when the moving electrode (16) occupies a rest position, and of the type wherein the excitation frequency of the circuit (10) is comprised overall within the low frequency range,
**characterised in that** a series resistor (26, 28, 30) is interposed between each of the three electrodes (16, 18, 20) and the capacitive bridge (14) so as to form a low-pass filter.

2. Electronic circuit (10) according to the preceding claim, **characterised in that** the series resistors (26, 28, 30) are identical.

3. Electronic circuit (10) according to claim 1, **characterised in that** the value of each resistor (26, 28, 30) is less than four hundred kilo ohms.

4. Electronic circuit (10) according to any of the preceding claims, **characterised in that** the capacitance of each capacitor (C1, C2) is less than or equal to six hundred femtofarads.

5. Accelerometer (32), **characterised in that** it includes an electronic circuit (10) according to any of the preceding claims, and **in that** it includes at least two capacitive sensors (12a, 12b, 12c) which measure acceleration values respectively in at least two directions, each capacitive sensor (12a, 12b, 12c) being connected to an associated capacitive bridge (14a, 14b, 14c) of the charge compensation type with the insertion of series resistors (26, 28, 30).

6. Accelerometer (32) according to the preceding claim, **characterized in that** it includes three capacitive sensors (12a, 12b, 12c) which measure acceleration values respectively in three directions orthogonal to each other.

## Patentansprüche

1. Elektronische Schaltung (10) zum Messen einer Kraft, die einen kapazitiven Sensor (12) umfasst, der mit einer kapazitiven Brücke (14) des Ladungskompensationstyps verbunden ist und für die der kapazitive Sensor (12) eine bewegliche Elektrode (16) aufweist, die zwischen einer ersten (18) und einer zweiten (20) festen Elektrode elastisch aufgehängt ist, derart, dass ein erster (C1) bzw. ein zweiter (C2) Kondensator mit variabler Kapazität gebildet wird, des Typs, bei dem die kapazitive Brücke (14) ein elektrisches Ausgangssignal (Vs) erzeugt, das eine Funktion der Veränderungen der Kapazität der Kondensatoren (C1, C2) ist, des Typs, bei dem der Wert der Kapazität jedes Kondensators (C 1, C2) wesentlich kleiner als ein Picofarad ist, wenn die bewegliche Elektrode (16) eine Ruhestellung einnimmt, und des Typs, bei dem die Erregungsfrequenz der Schaltung (10) global in dem Bereich niedriger Frequenzen liegt,
**dadurch gekennzeichnet, dass** zwischen jede der drei Elektroden (16, 18, 20) und die kapazitive Brücke (14) ein Reihenwiderstand (26, 28, 30) geschaltet ist, so dass ein Tiefpassfilter gebildet wird.

2. Elektronische Schaltung (10) nach dem vorhergehenden Anspruch, **dadurch gekennzeichnet, dass** die Reihenwiderstände (26, 28, 30) gleich sind.

3. Elektronische Schaltung (10) nach Anspruch 1, **dadurch gekennzeichnet, dass** der Wert jedes Widerstands (26, 28, 30) kleiner als vierhundert Kiloohm ist.

4. Elektronische Schaltung (10) nach einem der vorhergehenden Ansprüche, **dadurch gekennzeichnet, dass** die Kapazität jedes Kondensators (C1, C2) kleiner oder gleich sechshundert Femtofarad ist.

5. Beschleunigungsmesser (32), **dadurch gekennzeichnet, dass** er eine elektronische Schaltung (10) nach einem der vorhergehenden Ansprüche umfasst und dass er wenigstens zwei kapazitive Sensoren (12a, 12b, 12c) umfasst, die Beschleunigungswerte in wenigstens zwei Richtungen messen, wobei jeder kapazitive Sensor (12a, 12b, 12c) mit einer kapazitiven Brücke (14a, 14b, 14c) des Ladungskompensationstyps verbunden ist, die über dazwischen geschaltete Reihenwiderstände (26, 28, 30) zugeordnet ist.

6. Beschleunigungsmesser (32) nach dem vorhergehenden Anspruch, **dadurch gekennzeichnet, dass** er drei kapazitive Sensoren (12a, 12b, 12c) umfasst, die Beschleunigungswerte in den drei zueinander senkrechten Richtungen messen.
